# EUROPÄISCHE PATENTSCHRIFT

(11) **EP 2 783 454 B1**
(45) Veröffentlichungstag und Bekanntmachung des Hinweises auf die Patenterteilung: **24.03.2021**
(21) Anmeldenummer: 12791096.6
(22) Anmeldetag: 08.11.2012
(51) Int. Cl.: H02K 7/10, H02K 7/00, H02K 11/21

(54) **ELEKTRISCHE MASCHINE**
ELECTRIC MACHINE
MACHINE ÉLECTRIQUE

(30) Priorität: 21.11.2011 DE 102011118919
(43) Veröffentlichungstag der Anmeldung: 01.10.2014
(60) Teilanmeldung: 19180290.9
(73) Patentinhaber: Baumüller Nürnberg GmbH, 90482 Nürnberg (DE)
(72) Erfinder: MEISTER, Birgid, 97320 Sulzfeld (DE); VEEH, Michael, 97271 Kleinrinderfeld (DE)
(74) Vertreter: FDST Patentanwälte
(86) Internationale Anmeldenummer: PCT/EP2012/004645
(87) Internationale Veröffentlichungsnummer: WO 2013/075790

(56) Entgegenhaltungen:
- DE-A1-102008 028 658
- DE-U1- 29 714 743
- US-A- 3 877 827
- US-A- 4 290 711
- US-A1- 2010 225 186
- Anonymous: "Keys and Splines", Thecartech.com , 27. Mai 2010 (2010-05-27), XP002722409, Gefunden im Internet: URL:http://www.thecartech.com/subjects/mac hine_elements_design/keys_and_Splines.htm [gefunden am 2014-03-27]

## Beschreibung

Die Erfindung betrifft eine elektrische Maschine gemäß dem Oberbegriff des Anspruchs 1. Eine derartige Maschine ist z. B. aus der US 2010/0225186 A1 und aus der DE 10 2008 028 658 A1 bekannt. Bei der elektrischen Maschine kann es sich um einen Motor oder um einen Generator handeln.

Je nach Betrieb einer derartigen elektrischen Maschine als Motor oder als Generator wird die elektrische Leistung entweder der Maschine für die gewünschte Drehzahl und das bestimmungsgemäße Drehmoment zugeführt, oder der elektrischen Maschine wird die elektrische Leistung entnommen und für nachgeschaltete Aggregate, beispielsweise eines Nutzfahrzeuges, insbesondere im Inselbetrieb, entnommen. In der Betriebsweise als Generator wird der generatorisch erzeugte mehrphasige Wechselstrom mittels einer Elektronik (Umrichter) in einen Gleichstrom gewandelt, der dann beispielsweise über einen Zwischenkreis dem jeweiligen Aggregat oder Verbraucher zugeführt wird.

Der elektrischen Maschine ist häufig ein Anbauteil zugeordnet, das auf die Maschinenwelle aufgesetzt oder an diese angesetzt ist beziehungsweise wird, wobei das Anbauteil selbst oder ein Bestandteil desselben mit der Maschinenwelle wellenfest zu verbinden ist.

Aus der US 4,290,711 ist es bekannt, in einer Verbindung einer Welle mit einem Getriebeteil einen Rastkeil einzusetzen, der einen in eine Nut des Getriebeteils eingreifenden radialen Ansatz und einen zentralen Abschnitt aufweist, an den endseitig ein Schnappriegel angeformt ist. Der Rastkeil wird mit dessen zentralen Abschnitt in einen zwischen dem Getriebeteil und einem abgeflachten Oberflächenbereich der Welle gebildeten Hohlraum eingeschoben, bis der Schnappriegel die stirnseitige Ring- oder Endfläche des Getriebeteils übergreift und dort verrastet Ein weiteres Beispiel einer Verbindung zwischen einer Welle und einem Anbauteil ist in US 3 877 827 A offenbart.

Der Erfindung liegt die Aufgabe zugrunde, eine besonders geeignete (mechanische) Schnittstelle zur Anbindung eines Anbauteils anzugeben. Die Schnittstelle beziehungsweise Anbindung soll dabei möglichst einfach, zuverlässig und/oder dauerhaft sein, insbesondere im Hinblick auf betriebsbedingt auftretende Kräfte (Scher- und/oder Fliehkräfte).

Gelöst wird diese Aufgabe durch die Merkmale des unabhängigen Anspruchs. Bevorzugte Ausführungsformen sind in den abhängigen Ansprüchen definiert.

Die erfindungsgemäße Schnittstelle ist dazu vorgesehen und/oder ausgebildet zwischen der Maschinenwelle und dem Anbauteil eine form- und/oder kraftschlüssige Verbindung, insbesondere nach Art beziehungsweise zur Bereitstellung einer Momentenabstützung, herzustellen. Hierzu ist wellenseitig eine Passfeder oder ein Passfederelement vorgesehen, die beziehungsweise das mit einer korrespondierenden Verbindungs- oder Schnittstellenkontur des Anbauteils zusammenwirkt. Diese anbauseitige Kontur ist geeigneter Weise in oder an einem Verbindungs- oder Schnittstellenstutzen des Anbauteils vorgesehen. Dieser Verbindungs- oder Schnittstellenstutzen des Anbauteils nimmt einen Wellenabschnitt, insbesondere ein Wellenende, der Maschinenwelle auf. Die anbauteilseitige Schnittstellenkontur ist vorzugsweise in Form einer stirnseitig, das heißt zur Passfeder beziehungsweise zum Passfederelement hin offenen Nut, Kerbe, Ausnehmung oder dergleichen ausgebildet.

Das nachfolgend als Passfeder oder Passfederelement bezeichnete wellenseitige Schnittstellenelement sitzt in einer wellenseitigen Passnut, insbesondere nach Art einer Presspassung, ein. Bei dieser Passnut handelt es sich um eine sowohl in Axialrichtung als auch in Umfangsrichtung der Maschinenwelle begrenzte, lokale Ausnehmung in der Maschinenwelle. Mit anderen Worten handelt es sich bei der Passnut gerade nicht um eine Ringnut, die sich über den gesamten Wellenumfang oder einen wesentlichen Teil des Wellenumfangs der Maschinenwelle erstreckt. Vielmehr ist die umfangseitige oder tangentiale Ausdehnung der erfindungsgemäßen Passnut auf einen Bruchteil des Wellenumfangs begrenzt, wobei dieser Bruchteil weniger, insbesondere wesentlich weniger als einem Viertel des Wellenumfangs entspricht.

Die axiale Ausdehnung der erfindungsgemäßen Passnut ist ebenfalls auf einen geringen Bruchteil der Maschinenwelle begrenzt. Vorzugsweise ist die axiale Ausdehnung der wellenseitigen Passnut grösser als die umfangseitige beziehungsweise tangentiale Ausnehmung der erfindungsgemäßen Passnut. Zudem ist die erfindungsgemäße Passnut, die im Wesentlichen rechteckförmig ausgebildet ist und deren Längserstreckung in Axialrichtung der Maschinenwelle verläuft, mit abgerundeten Passnutecken ausgeführt.

Die Passfeder als (wesentliches) Schnittstellenelement ist ein Formteil mit einem Passkörper oder Passkörperabschnitt und einem daran angesetzten, insbesondere angeformten, Federkörper. Während der Passkörper der Passfeder vollständig in der wellenseitigen Passnut einliegt, erstreckt sich der Federkörper der Passfeder radial über den Wellenumfang der Maschinenwelle hinaus und ragt somit an der lokalen, exponierten Schnittstelle aus der Maschinenwelle umfangseitig heraus. Die im wellenseitigen Passsitz radiale Höhe der Passfeder, d. h. dessen Passkörpers ist vorzugsweise geringer als die (radiale) Tiefe der wellenseitigen Passnut.

Der Federkörper der Passfeder ist kleiner als dessen Passkörper. Der Federkörper ist gegenüber dem Passkörper der Passfeder zurückgesetzt, so dass ein nachfolgend auch als Überdeckungsabschnitt bezeichneter Passkörperabschnitt gebildet ist. Im Passsitz des Passkörpers in der Passnut der Maschinenwelle fluchtet dieser Überdeckungsabschnitt der Passfeder mit der Wellenoberfläche der Maschinenwelle oder ist bevorzugt dieser gegenüber radial zumindest geringfügig zur Wellenachse hin (radial nach innen) zurückgesetzt. Hierdurch soll sichergestellt werden, dass der Überdeckungsabschnitt der Passfeder nicht über die Wellenoberfläche der Maschinenwelle hinausragt.

In der schnittstellenseitigen mechanischen Verbindung des Anbauteils mit der Maschinenwelle überdeckt das Anbauteil beziehungsweise dessen Verbindungsstutzen den Passkörper- oder Überdeckungsabschnitt der Passfeder. Gleichzeitig greift der Federkörper der Passfeder in die anbauteilseitige Verbindungskontur vorzugsweise formschlüssig ein. Somit ist einerseits eine zuverlässige wellenfeste Verbindung zwischen dem Anbauteil und der Maschinenwelle hergestellt und eine rotatorische Relativbewegung zwischen dem Anbauteil und der Maschinenwelle zuverlässig verhindert.

Gleichzeitig ist infolge der Überdeckung des Passkörperabschnitts beziehungsweise Überdeckungsabschnitts der Passfeder durch das Anbauteil bzw. dessen Verbindungsstutzen ein Herauslösen der Passfeder aus der wellenseitigen Passnut, insbesondere aufgrund von Fliehkräften, zuverlässig unterbunden. Zudem ist aufgrund des ausreichenden, auf die betriebsbedingt wirksamen Kräfte angepassten Volumens der Passfeder ein Abscheren des Federkörpers der Passfeder zuverlässig vermeidbar, indem durch Material und Baugröße bzw. geometrische Abmessungen der Passfeder die in diese über den in der Schnittstelle wirksamen Federkörper eingebrachten Kräfte zuverlässig aufgenommen werden können.

Zusätzlich zu der Formschlussverbindung in der Schnittstelle zwischen der wellenseitigen Passfeder und der anbauteilseitigen Verbindungskontur wird vorzugsweise eine Kraft- oder Reibschlussverbindung zwischen der Maschinenwelle und dem Anbauteil hergestellt. Hierzu weist die Maschinenwelle geeigneterweise eine zweckmäßig sich über den Wellenumfang der Maschinenwelle erstreckende Kragen- oder Schulterkontur auf, an oder gegen die eine korrespondierende Anlagekontur des Anbauteils in dessen Verbindung mit der Maschinenwelle geführt ist. Mittels einer vorzugsweise axialen Schraubverbindung zwischen dem Anbauteil und der Maschinenwelle wird der Kraftschluss zwischen der wellenseitigen Schulter- bzw. Kragenkontur und der anbauteilseitigen Anlagekontur hergestellt, die geeigneterweise stirnseitig am Verbindungsstutzen des Anbauteils gebildet ist. Für diese Schraubverbindung ist in die Maschinenwelle von deren der Schnittstelle zugewandten Stirnseite her eine Gewindebohrung in die Maschinenwelle eingebracht.

Bevorzugt ist das Anbauteil ein Geber und/oder Sensor zur Bestimmung der (absoluten) Winkellage der Maschinenwelle bzw. des Rotors der elektrischen Maschine. Die erfindungsgemäße Passfeder-Schnittstelle eignet sich daher bevorzugt zur Momentenabstützung eines Resolvers (Resolvermomentenabstützung), das heißt, der wellenfesten Anbindung dessen Geberrotors an die Maschinenwelle der elektrischen Maschine.

Nachfolgend wird ein Ausführungsbeispiel der Erfindung anhand einer Zeichnung näher erläutert. Darin zeigen:
- Fig. 1: in perspektivischer Darstellung eine elektrische Maschine mit Blick auf einen (lagerschildseitigen) Wellenzapfen einer Maschinenwelle mit erfindungsgemäßer Passfeder-Schnittstelle,
- Fig. 2: die elektrische Maschine gemäß Fig. 1 in einem (axialen) Längsschnitt,
- Fig. 3: einen Ausschnitt III aus Fig. 2 in größerem Maßstab mit in eine wellenseitige Passnut eingesetzter Passfeder,
- Fig. 4: schematisch in einer Seitenansicht bzw. (teilweisen) Schnittdarstellung die Schnittstellenverbindung zwischen der wellenseitigen Passfeder und einem Anbauteil,
- Fig. 5: die Verbindung/Anbindung des Anbauteils mit der Maschinenwelle in einer Draufsicht auf die Passfeder-Schnittstelle,
- Fig. 6: in einer perspektivischen Darstellung die Passfeder mit einem Passkörper und einem erhabenen Federkörper, und
- Fig. 7: in Stirnansicht eine erfindungsgemäße Schnittstelle zwischen einer Welle und einem Anbauteil bzw. einem Wellenanschluss hiervon mit wellenseitiger Passnut und darin einsetzbarer Passfeder sowie mit einer Schraubbefestigung,
- Fig. 8: die Schnittstelle in einer Schnittdarstellung entlang der Linie VIII-VIII in Fig. 7,
- Fig. 9: die Schnittstelle im Querschnitt entlang der Linie IX-IX in Fig. 8,
- Fig. 10: in perspektivischer Darstellung die Schnittstelle zwischen Welle und Anbauteil bzw. Wellenanschluss mit wellenseitiger Passnut und darin einsetzbarer Passfeder sowie mit einer Schraubbefestigung, und
- Fig. 11: die Schnittstelle gemäß Fig. 10 in einer Explosionsdarstellung.

Einander entsprechende Teile sind in allen Figuren mit den gleichen Bezugszeichen versehen.

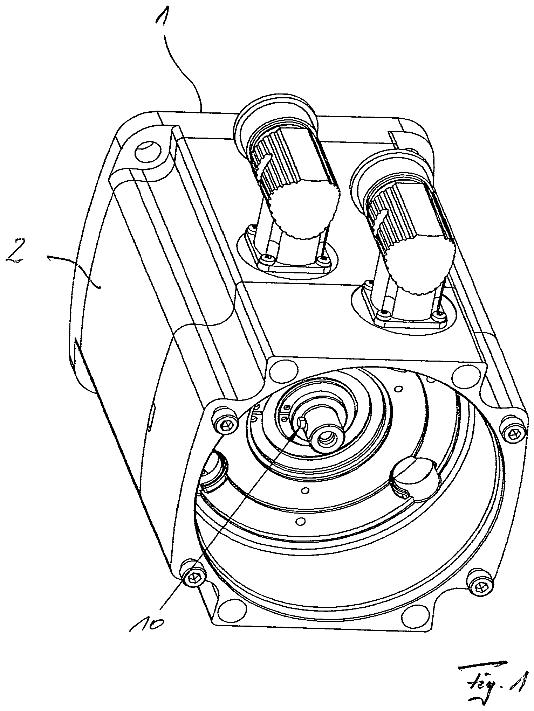

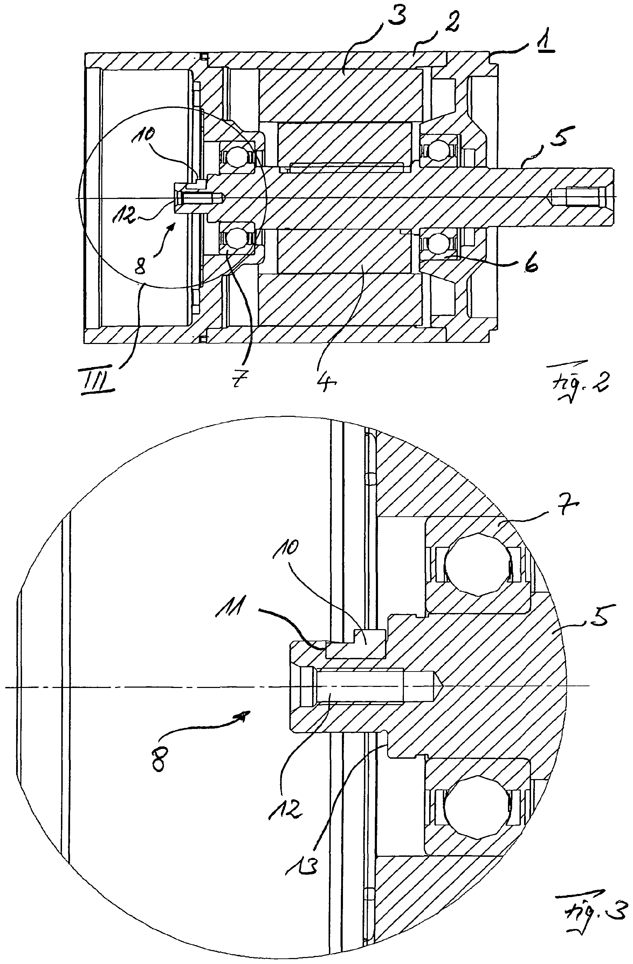

Die in den Fig. 1 und 2 gezeigte elektrische Maschine 1 weist ein Maschinengehäuse 2 zur Aufnahme eines Stators 3 und eines von diesem umgebenen Rotors 4 auf, der auf einer nachfolgend allgemein auch als Welle bezeichneten Maschinenwelle 5 sitzt. Der Rotor 4 bzw. die Maschinenwelle 5 ist in einem ersten Lager (Kugel- oder Wälzlager) 6 und in einem zweiten Lager (Kugel- oder Wälzlager) 7 innerhalb des Maschinengehäuses 2 gelagert.

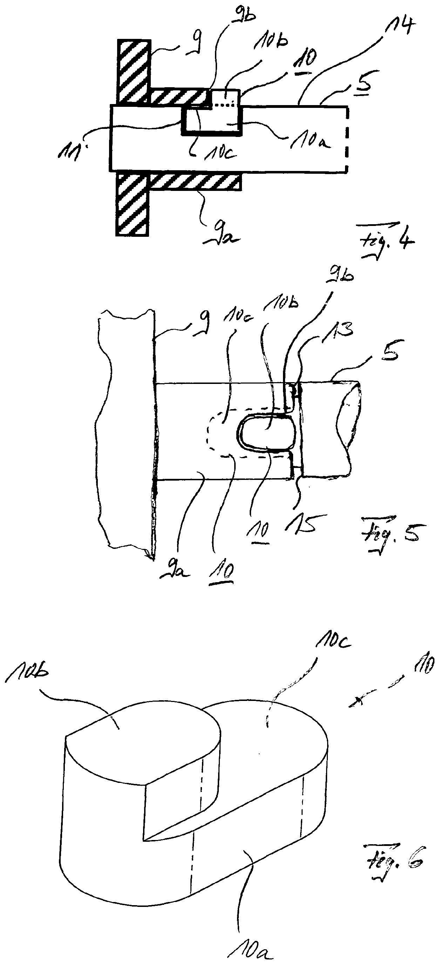

Dem in der Fig. 1 linken Lager 7 zugewandt befindet sich eine Schnittstelle 8 zur Anbindung eines Anbauteils 9 (Fig. 4, 5 und 7). Bestandteil der Schnittstelle 8 ist ein nachfolgend als Passfeder bezeichnetes Passfederelement 10. Diese bzw. dieses ist in eine wellenseitige Passnut 11 passgenau, vorzugsweise unter Bildung eines Presssitzes, eingesetzt. Im Bereich der Passfeder-Schnittstelle 8 ist - von der dem Lager 7 zugewandten Wellenstirnseite her - in die Maschinenwelle 5 eine Gewindebohrung 12 eingebracht. Zudem weist die Maschinenwelle 5 im Bereich der Passfeder-Schnittstelle 8 eine Schulter- oder Kragenkontur 13 auf, die eine Anlage (Anlage- oder Anschlagfläche), vorzugsweise eine sich über den Wellenumfang erstreckende ringförmige Anschlag- bzw. Anlagefläche bildet.

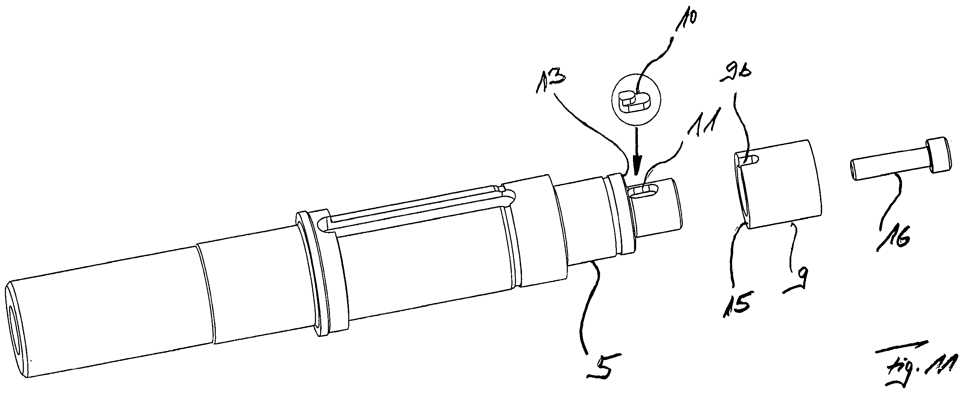

Gemäß den Fig. 4 bis 11 weist die Passfeder 10 einen im Wesentlichen rechteckförmigen Passkörper 10a mit vorzugsweise abgerundeten Eckbereichen auf. An diesem ist ein Federkörper 10b angeformt, der über den Passkörper 10a hinaussteht und an einer Schmalseite des Passfederkörpers mit diesem fluchtet. Ansonsten ist der Federkörper 10b gegenüber dem Passkörper 10a zurückversetzt, so dass eine Überdeckungsfläche beziehungsweise ein Passkörperabschnitt 10c gebildet ist.

Im Pass- oder Presssitz der Passfeder 10 innerhalb der wellenseitigen Passnut 11 fluchtet dieser Überdeckungsabschnitt (Passkörperabschnitt) 10c mit der Wellenoberfläche 14 der Welle 5. Vorzugsweise ist jedoch die radiale Höhe des Passkörpers 10a zumindest geringfügig kleiner als die radiale Tiefe der Passnut 11. Im in den Fig. 4, 5 und 7 bis 10 gezeigten Montagezustand überdeckt das Anbauteil 9 bzw. dessen Verbindungsstutzen 9a den Überdeckungs- bzw. Passkörperabschnitt 10c der Passfeder 10, während der Federkörper 10b der Passfeder 10, vorzugsweise formschlüssig, in einer einseitig offenen Verbindungskontur 9b des Anbauteils 9 bzw. dessen Verbindungsstutzen 9a einsitzt oder in diese eingreift. Stirnseitig liegt der Verbindungsstutzen 9a bzw. das Anbauteil 9 mit einer Anlagefläche 15 an der durch die Schulter- bzw. Kragenkontur 13 der Welle 5 gebildeten wellenseitigen Anlage- oder Gegenlagerfläche 13 an.

Eine Kraftschlussverbindung zwischen der Welle 5 und dem Anbauteil 9 bzw. kraftschlüssige Anlage der anbauteilseitigen Anlagefläche 15 an der wellenseitigen Anlagefläche 13 wird mittels einer axialen Schraubverbindung zwischen dem Anbauteil 9 und der Welle 5 hergestellt. Hierzu ist/wird geeigneterweise in die wellenseitige Gewindebohrung 12 eine entsprechende Schraube 16 (vorzugsweise mit metrischen Gewinde) eingeschraubt.

Die Erfindung ist nicht auf die vorstehend beschriebenen Ausgestaltungen beschränkt. Vielmehr können auch andere Varianten der Erfindung von dem Fachmann hieraus abgeleitet werden, ohne den Gegenstand der Erfindung zu verlassen. Insbesondere sind ferner alle beschriebenen Einzelmerkmale auch auf andere Weise miteinander kombinierbar, ohne den Gegenstand der Erfindung zu verlassen.

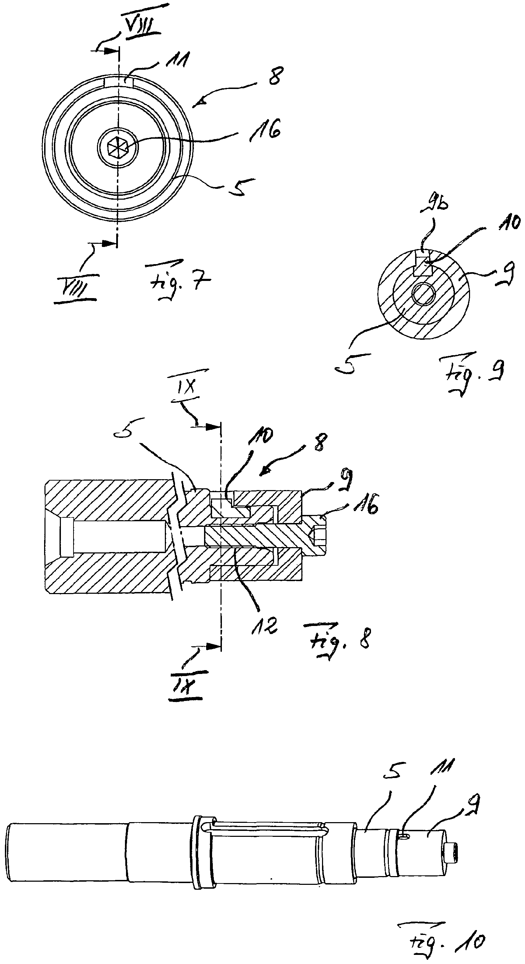

So zeigen die Fig. 7 bis 11 allgemein zwischen einer Welle 5 und einem Anbauteil 9 eine Schnittstelle 8 mit einer wellenseigen Passfeder 10 und einer anbauteilseitigen Verbindungs- oder Formschlusskontur 9b. Ein zusätzlicher Kraftschluss wird, insbesondere zwischen der anbauteilseitigen Anlagefläche (Anlage) 15 und der wellenseitigen Anlagefläche (Anlage) 13, mittels der (wellenstirnseitigen) Schraubverbindung 12, 16 hergestellt.

### Bezugszeichenliste

- 1: elektrische Maschine
- 2: Maschinengehäuse
- 3: Stator
- 4: Rotor
- 5: Maschinen-/Welle
- 6, 7: Lager
- 8: Schnittstelle
- 9: Anbauteil
- 9a: Verbindungsstutzen
- 9b: Verbindungskontur
- 10: Passfeder/ -element
- 10a: Passkörper
- 10b: Federkörper
- 10c: Passkörper- /Überdeckungsabschnitt
- 11: Passnut
- 12: Gewindebohrung
- 13: Schulter-/Kragenkontur bzw. wellenseitige Anlage/-fläche
- 14: Wellenoberfläche
- 15: anlagenteilseitige Anlage/-fläche
- 16: Schraube

## Patentansprüche

1. Elektrische Maschine mit einem Maschinengehäuse (2), in dem zur Aufnahme ein Stator (3) und ein auf einer Maschinenwelle (5) sitzender Rotor (4) aufgenommen sind, sowie mit einem mit der Maschinenwelle (5) über eine mechanische Schnittstelle (8) verbundenen Anbauteil (9), wobei die Schnittstelle (8) zur Herstellung einer Form- und/oder Kraftschlussverbindung zwischen einem wellenseitigen Passfederelement (10) und einem auf der Maschinenwelle (5) sitzenden Verbindungsstutzen (9a) des Anbauteils (9) vorgesehen und ausgebildet ist, **dadurch gekennzeichnet,**
- **dass** das Passfederelement (10) einen vollständig in einer wellenseitigen Passnut (11) einsitzenden Passkörper (10a) und einen Federkörper (10b) umfasst, der in einer anbauteilseitigen und einseitig offenen Verbindungskontur (9b) einsitzt,
- **dass** der Federkörper (10b) gegenüber dem Passkörper (10a) erhaben ist und an einer Schmalseite des Passkörpers (10a) mit diesem fluchtet, und
- **dass** der Federkörper (10b) unter Bildung eines in der Verbindung mit dem Anbauteil (9) von diesem überdeckten Passkörperabschnitts (10c) zurückgesetzt sowie zum Rotor (4) hin ausgerichtet ist.

2. Elektrische Maschine nach Anspruch 1,
**dadurch gekennzeichnet,**
**dass** die anbauteilseitige Verbindungskontur (9b) der Schnittstelle (8) in einem einen Maschinenwellenabschnitt aufnehmenden Verbindungsstutzen (9a) in Form einer stirnseitig offenen Nut oder Kerbe oder Ausnehmung gebildet ist.

3. Elektrische Maschine nach Anspruch 1 oder 2,
**dadurch gekennzeichnet,**
**dass** das Anbauteil (9) ein Winkelsensor, ein Geber, ein Resolver, ein Zahnrad oder eine Bremse ist.

4. Elektrische Maschine nach einem der Ansprüche 1 bis 3,
**dadurch gekennzeichnet,**
**dass** sich die Passnut (11) über einen axial begrenzten Wellenabschnitt der Maschinenwelle (5) und/oder über einen tangential begrenzten Umfangsabschnitt der Maschinenwelle (5) erstreckt.

5. Elektrische Maschine nach Anspruch 1,
**dadurch gekennzeichnet,**
**dass** das Anbauteil (9) gegen die bzw. mit der Maschinenwelle (5) verschraubt ist.

6. Elektrische Maschine nach einem der Ansprüche 1 bis 5,
**dadurch gekennzeichnet,**
**dass** die Maschinenwelle (5) im Bereich der Schnittstelle (8) eine, insbesondere umfangsseitig umlaufende Kragen- und/oder Schulterkontur (13) aufweist, gegen die sich der Verbindungsstutzen (9a) des Anbauteils (9) stirnseitig, insbesondere in Folge der Schraubverbindung oder dergleichen kraftschlüssig, abstützt.

## Claims

1. Electric machine with a machine housing (2), in which a stator (3) and a rotor (4) seated on a machine shaft (5) are accommodated for reception, and with an add-on part (9) connected to the machine shaft (5) via a mechanical interface (8), the interface (8) being provided and designed for producing a positive and/or frictional connection between a spring key element (10) on the shaft side and a connecting socket (9a) of the add-on part (9) seated on the machine shaft (5),
**characterized in**
- **that** the spring key element (10) comprises a spring key body (10a), which is entirely seated in a fitting groove (11) on the shaft side and a spring body (10b), said spring body (10b) being seated in a connecting contour (9b) on the add-on part side, which is open on one side,
- **that** the spring body (10b) is raised relative to the fitting body (10a) and is aligned therewith on a narrow side of the fitting body (10a), and
- **that** the spring body (10b) is set back to form a fitting body section (10c), which is covered by the add-on part (9) in connection with the latter.

2. Electric machine according to claim 1,
**characterized in**
**that** the connecting contour (9b) of the interface (8) on the add-on part side is formed in a connecting socket (9a) receiving a machine shaft section in the form of a groove or notch or recess open on the end face.

3. Electrical machine according to claim 1 or 2,
**characterized in**
**that** the add-on part (9) is an angle sensor, a transmitter, a resolver, a gear or a brake.

4. Electrical machine according to one of claims 1 to 3,
**characterized in**
**that** the fitting groove (11) extends over an axially limited shaft section of the machine shaft (5) and/or over a tangentially limited circumferential section of the machine shaft (5).

5. Electric machine according to claim 1,
**characterized in**
**that** the add-on part (9) is screwed against or to the machine shaft (5).

6. Electric machine according to one of the claims 1 to 5,
**characterized in**
**that** the machine shaft (5) comprises, in the region of the interface (8), a collar and/or shoulder contour (13), in particular circumferential, against which the connecting socket (9a) of the add-on part (9) is supported on the end face, in particular in a force-fitting manner as a result of the screw connection or the like.

## Revendications

1. Machine électrique avec un boîtier de machine (2), dans lequel sont logés un stator (3) et un rotor (4) monté sur un arbre de machine (5) pour la réception, et avec une pièce rapportée (9) reliée à l'arbre de machine (5) par l'intermédiaire d'une interface mécanique (8), l'interface (8) étant prévue et conçue pour réaliser une liaison par complémentarité de forme et/ou par friction entre un élément à ressort ajusté (10) côté arbre et une tubulure de raccordement (9a) de la pièce rapportée (9) montée sur l'arbre de machine (5),
**caractérisée en ce**
**que** l'élément à ressort ajusté (10) comprend un corps ajusté (10a), qui est entièrement logé dans une rainure de montage (11) du côté de l'arbre et un corps de ressort (10b), ledit corps de ressort (10b) étant logé dans un contour de raccordement (9b), qui se trouve du côté de la pièce rapportée et qui est ouvert sur un côté,
- **que** le corps de ressort (10b) est surélevé par rapport au corps ajusté (10a) et est aligné avec celui-ci sur un côté étroit du corps ajusté (10a), et
- **que** le corps de ressort (10b) est en retrait, formant une section de corps ajusté (10c), qui est recouverte par la pièce rapportée (9) lorsque celle-ci est reliée, et est orientée vers le rotor (4).

2. Machine électrique selon la revendication 1,
**caractérisée en ce**
**que** le contour de raccordement (9b) de l'interface (8) du côté de la pièce rapportée est formé dans une tubulure de raccordement (9a), qui reçoit une section d'arbre de machine sous la forme d'une rainure ou d'une encoche ou d'un évidement ouvert sur la face frontale.

3. Machine électrique selon la revendication 1 ou 2,
**caractérisée en ce**
**que** la pièce rapportée (9) est un capteur d'angle, un émetteur, un résolveur, un engrenage ou un frein.

4. Machine électrique selon l'une des revendications 1 à 3,
**caractérisée en ce**
**que** la rainure de montage (11) s'étend sur une section axiale limitée de l'arbre de machine (5) et/ou sur une section circonférentielle limitée tangentiellement de l'arbre de machine (5).

5. Machine électrique selon la revendication 1,
**caractérisée en ce**
**que** la pièce rapportée (9) est vissée contre ou sur l'arbre de machine (5).

6. Machine électrique selon l'une des revendications 1 à 5,
**caractérisée en ce**
**que** l'arbre de machine (5) comprend, dans la zone de l'interface (8), un contour de collet et/ou d'épaulement (13), en particulier périphérique, contre lequel la tubulure de raccordement (9a) de la pièce rapportée (9) s'appuie du côté frontal, en particulier par adhérence, par le biais du raccord à vis ou similaire.
